# EUROPEAN PATENT SPECIFICATION

(11) **EP 3 224 546 B1**
(45) Date of publication and mention of the grant of the patent: **14.10.2026**
(21) Application number: 15864180.3
(22) Date of filing: 25.11.2015
(51) Int. Cl.: F24F 7/06, F24F 11/00, F24F 110/40, G01M 3/26, F24F 7/00

(54) **METHOD FOR MEASURING PRESSURE DIFFERENCES BETWEEN DIFFERENT PREMISES IN A BUILDING**
VERFAHREN ZUR MESSUNG DER DRUCKUNTERSCHIEDE ZWISCHEN VERSCHIEDENEN RÄUMEN IN EINEM GEBÄUDE
PROCÉDÉ DE MESURE DE DIFFÉRENCES DE PRESSION ENTRE DIFFÉRENTS LOCAUX DANS UN BÂTIMENT

(30) Priority: 26.11.2014 FI 20146037
(43) Date of publication of application: 04.10.2017
(73) Proprietor: Simap Oy, 00330 Helsinki (FI)
(72) Inventor: LAINE, Seppo, FI-00330 Helsinki (FI); VOIPIO, Ville, FI-00330 Helsinki (FI)
(74) Representative: Berggren Oy
(86) International application number: PCT/FI2015/050822
(87) International publication number: WO 2016/083670

(56) References cited:
- EP-A1- 1 628 087
- JP-A- 2001 091 397
- JP-A- 2001 141 598
- JP-A- 2004 157 055
- JP-A- 2010 071 950
- JP-A- H0 961 282
- JP-A- H09 145 517
- JP-A- S 599 444
- US-A- 3 402 654
- US-A1- 2007 218 823
- US-A1- 2010 161 135
- US-A1- 2012 318 073
- US-A1- 2013 245 836
- US-A1- 2013 305 814
- JO, J.-H. ET AL.: "Characteristics of pressure distribution and solution to the problems caused by stack effect in high-rise residential buildings'.", BUILDING AND ENVIRONMENT, vol. 42, no. 1, 2007, pages 263 - 277, XP005667894, ISSN: 0360-1323, DOI: doi:10.1016/j.buildenv.2005.07.002

## Description

The invention relates to a method for measuring pressure differences of different spaces in a building, in which method the pressure difference is measured by means of one or more sensors measuring absolute pressure.

The invention relates to building automation, particularly ventilation of buildings.

From prior art is known a technology for measuring pressure differences of different parts of buildings with two-port pressure difference meters. These measuring instruments usually feature two hoses or ducts through which air pressure is led to the measuring element from the spaces being measured, such as from the outside and inside of a building. This may also be implemented in such a manner that the measuring element is located in one of the spaces being compared, whereby one channel, only, is needed for the pressure. The main difficulty in prior art is its inconvenient installation; particularly its installation in an existing building is difficult. Furthermore, the pressure channels may require regular maintenance.

Measuring pressure differences may also be performed by using two measuring elements for measuring absolute pressure, and by subtracting their measurement results from each other. This arrangement is obvious for a person skilled in the art. However, this type of measuring involves numerous practical problems. Examples of the problems include long-term instability of the measuring elements, required high measuring accuracy, and the pressure differences caused by installing the measuring instruments at different heights. The sources of error related to absolute sensors are caused by the required high dynamics, because in practice the required measuring accuracy is in the order of 1 Pa (pascal), and the prevailing air pressure is in the order of 100 000 Pa. Therefore, a solution which replaces two-port pressure difference meters or the like with sensors measuring absolute pressure will not result in a feasible solution.

An object of the invention is to provide a measuring arrangement which enables prior art drawbacks to be eliminated. This is achieved by the method defined in claim 1. Preferred embodiments of the present invention are defined in the dependent claims.

The advantage of the invention is that accurate measurement information is obtained for effective control of the ventilation process, whereby ventilation may be effectively controlled. A further advantage of the invention is that the invention may be adapted in an advantageous manner, that is, the installation and use of the required measuring sensors do not generate high costs.

In the following, the invention will be explained in closer detail by means of the figures in the attached figures, in which
Figure 1 shows a schematic view of a building in which a measuring arrangement applying the method according to the invention is used,
Figure 2 shows a schematic view of the actual air pressure and a typical output signal from a measuring instrument,
Figure 3 is a schematic representation of a situation where the efficiency of a ventilation device is varying,
Figure 4 is a schematic view of the efficiency of a ventilation device as well as the measured and corrected pressures in the situation in question,
Figure 5 is a schematic view of a situation where a ventilation device is very abruptly switched off, and where the air pressure in the indoor spaces becomes even with the air pressure outside,
Figure 6 is a schematic view of a situation where the differences in air pressure in the spaces that are being measured dynamically change while the sampling moments are out of phase both mutually and with respect to air pressure variation,
Figure 7 is a schematic view of a situation where there is a large number of similar changes in air pressure, and where the sampling moments occur randomly in relation to the changes,
Figure 8 is a schematic view of the situation of Figure 7 with the changes in air pressure drawn one on the other, whereby the sampling moments occur as a random group, and
Figure 9 shows schematic examples of different distributions produced by different changes.

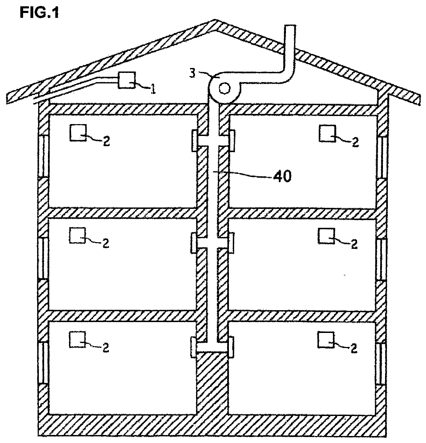

Figure 1 is a schematic view of a building where a measuring arrangement applying the method of the invention is used. Figure 1 shows schematically a situation where the pressure difference between the outdoor air and the indoor space is measured. The arrangement has a reference sensor 1 measuring the absolute outdoor pressure, sensors 2 measuring the absolute pressures of the indoor space, as well as a ventilation device 3 which in this case removes air from the building through a ventilation duct 40 leading to the rooms.

The example of Figure 1 shows a ventilation device. The ventilation device is, however, not an essential issue from the point of view of the invention, although a ventilation device is, in practice, almost always present. For the invention, it is essential that ventilation can be measured and that ventilation either varies adequately on its own, or that it can be adjusted. By measuring or adjusting the variation, such variation is achieved that can be mathematically separated from the signal of the absolute meters. In the following, the invention will be described in greater detail by means of the example of Figure 1.

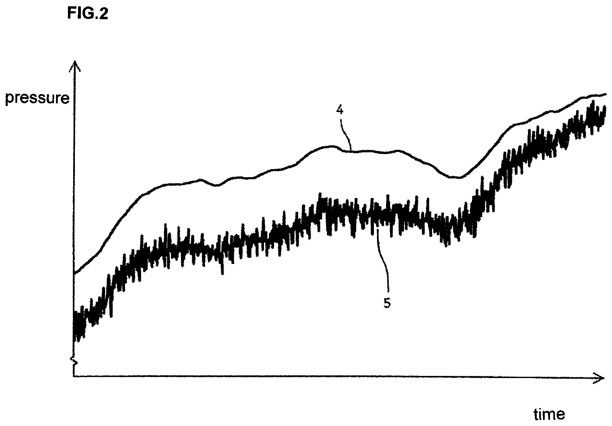

The measuring signal of an absolute pressure measurement typically involves a plurality of error sources. Measurements include constant error due to, for example, issues related to individual measuring instruments. A measurement result also includes random noise, and the measurement result is not stable over a long-term period. This is illustrated in Figure 2 which shows the actual air pressure 4 and a typical output signal 5 from a measuring instrument.

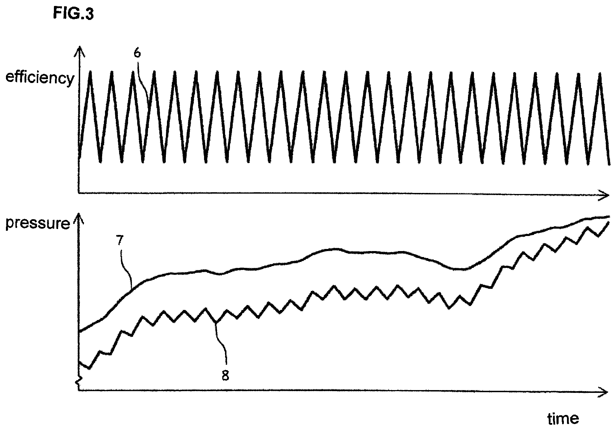

Figure 3 shows, with the aid of a schematic example, a situation where the efficiency of a ventilation device 6 is varying. The efficiency of the ventilation device may here be understood to refer to any repeatable variable that measures a quantity of ventilation, such as the electrical input power of a fan, the amount of air passing in a duct, or pressure difference across the ventilation device. Efficiency variation will not be evident in results 7 of the sensor measuring outdoor pressure, but it is shown in results 8 of the sensor measuring indoor air pressure. The results from the sensors should be uniform when the efficiency of the ventilation device is zero, but due to the installation height, long-term instability of the sensors, and different initial error this is not realized. Despite this, the effect of ventilation on the pressure difference is mathematically separable by using correlation methods, for example. For reasons of clarity, random noise referred to in the above has been left out of the measurement results.

The use of the measurement results 7 produced by a reference sensor 1 makes the mathematical processing of the results easier, because one major source of measurement result variation is made known. However, the use of a reference sensor is not imperative from the viewpoint of the invention, because the response of different spaces to ventilation changes may be determined by comparing the pressure in a single space to the average of the measurement results of all or a plurality of sensors, or to another similar statistical variable. Pressure changes in outdoor air pressure affect all the sensors in the same way, whereby this common component may be removed. In this way, it is possible to determine how ventilation affects each of the single spaces.

The separation of the aforementioned practical error sources from the changes in measurement results caused by changes in ventilation may, in addition to temporal correlation, be based on utilizing the characteristics of the frequency range of the error sources. Random noise is typically evenly distributed on the whole frequency range, whereby it may be reduced by filtering the measurement signal with a low-pass filter. An advantageous way to implement the low-pass filtering is to average more than one measurement results. In this case, the time scale used is typically seconds or minutes.

The long-term instability of the measurement device, in turn, is a slow phenomenon whose time scale typically ranges from days to years. This phenomenon can be clearly distinguished from the pressure changes caused by changes in ventilation, if the pressure changes caused by ventilation are faster than this. In the compensation of a slow phenomenon, it is in some cases also advantageous to assume that the change in a shorter period of time is linear.

A very advantageous practical way to implement the arrangement is one where the efficiency of the ventilation device is controlled by a control unit which also gathers the measurement information of the indoor spaces and reference sensor. The control unit switches the ventilation off once a day, for example, whereby the pressure difference between spaces will even out, as known. In such a case, the measurement signal generated by the indoor sensors may be reset with respect to the signal generated by the outdoor sensor.

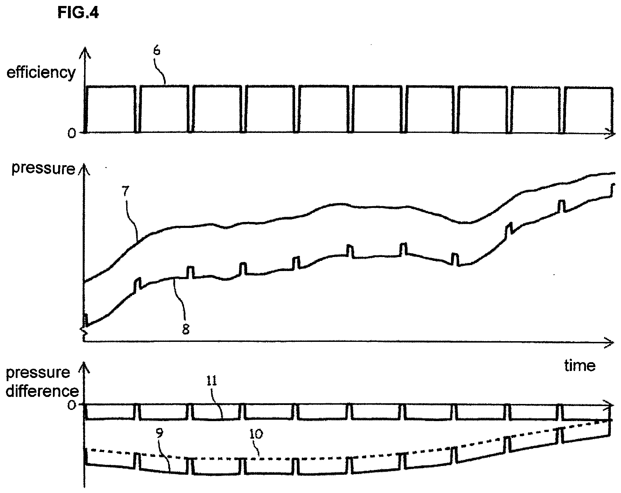

Figure 4 shows the ventilation efficiency and the measured pressures for this embodiment. The efficiency 6 of the ventilation device is at a constant level most of the time, but it is periodically switched off completely. The outdoor pressure 7 is still independent of the ventilation, and the indoor air pressure 8 reflects the ventilation operation so that the actual pressure difference is zero when the ventilation device is not in use. By subtracting the outdoor pressure measurement 7 from the pressure measurement 8 for the indoor air in the indoor spaces, an uncorrected pressure difference 9 will be obtained, indicating the instability of the measurement signal. Instability is corrected by a correction 10 which is calculated on the basis of the resetting moments, and which is calculated here as a linear interpolation between the resetting moments. The correction 10 may be calculated by numerous other known interpolation methods as well. The final pressure difference information 11 is obtained by subtracting the correction 10 determined on the basis of the zero points from the difference 9 of the pressure results of the pressure measurement devices.

Buildings, in practice, have numerous disturbance factors that may momentarily change the air pressure balance of the building. These include, for example, opening of a single window, which in practice clears the pressure difference between outdoor and indoor air. Because these error sources may be considered temporary and random by nature in determining a longer-term pressure balance, various kinds of filtering methods may be applied to remove them.

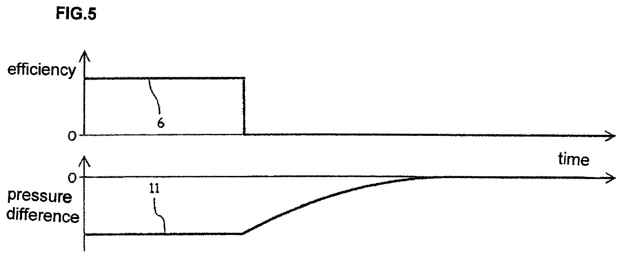

If the changes in ventilation efficiency are fast by nature, the change in the air pressure after the change in efficiency may be used to determine leakage air flow rates. Figure 5 shows a situation where ventilation 6 is very quickly switched off. In such a case, the air pressure of the indoor spaces seeks balance with the outdoor air pressure 7 with a delay, whereby the difference 11 between the air pressures approaches zero. The amount of delay combined with information on the volume of the indoor spaces makes it possible to determine air flow absolutely in the units Us, for example, because the amount of air in the spaces can be calculated with the aid of the volume and absolute pressure. As a result, the invention makes it possible to measure absolute air flow in different pressure situations. Because the invention also enables measuring air pressure differences, it may be used to determine the ventilation of spaces as a whole.

It should be noted that making such a calculation does not require ventilation to be closed down entirely, but any known efficiency change taking place in an adequately short period of time makes it possible to calculate a change in the air flow, because the calculation is based on dynamic examination of the pressure difference in the change situations.

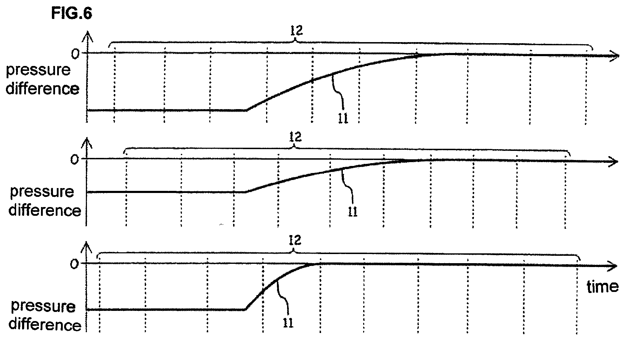

An advantageous method for implementing the arrangement is to use a wireless measurement network in which wireless measurement sensors schedule their operation by themselves. The cost-effectiveness of the arrangement stems from its low consumption of electrical power and ease of installation. A difficulty associated with the arrangement is that, for phenomena shorter than the measurement interval, no time series that could be timed can be obtained, resulting in that the dynamic characteristics of a change cannot be calculated directly. Figure 6 shows a situation where the differences 11 in air pressure in the spaces that are being measured change dynamically while the sampling moments 12 of the measurement sensors in different spaces are out of phase both mutually and with respect to air pressure variation.

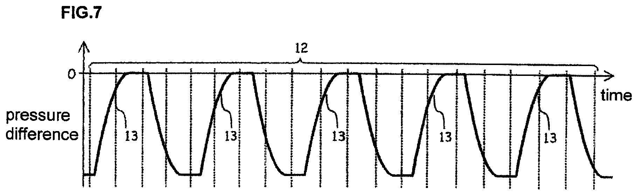

It is obvious that in the situation of Figure 6 it is not possible to determine the dynamic behaviour of air pressure from a single measurement in a change situation. According to the invention, however, there is a large number of changes in air pressure, such as once a day, for example, whereby the dynamic behaviour may also be determined from samples taken at random moments. Figure 7 is shows a situation where there is a large number of similar changes 13 in air pressure, and where the sampling moments 12 occur randomly with respect to these changes.

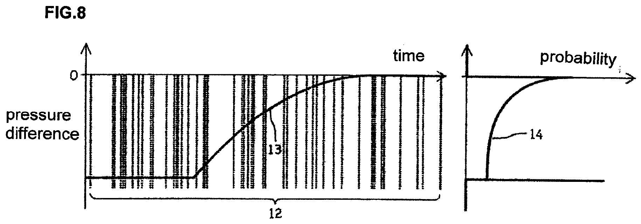

The situation may be shown, as in Figure 8, also by drawing the air pressure changes 13 one on the other whereby the sampling moments 12 occur as a random group on the range of the air pressure changes. When there is a large number of obtained samples, a statistical distribution 14 may be fashioned out of them.

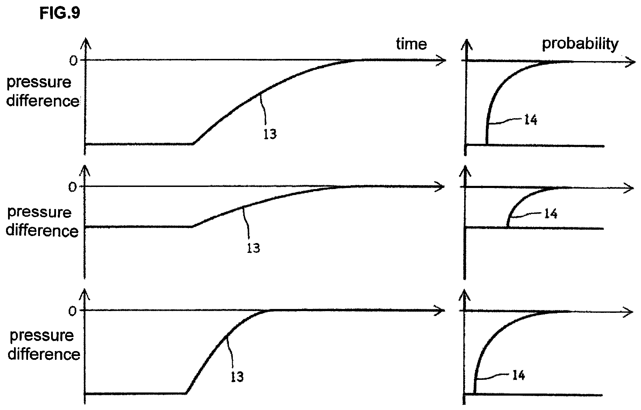

Figure 9 shows examples of how different changes 13 produce different distributions 14. Since it is known that a change is monotonous, the shape of the distribution makes it possible to calculate the shape of the original change event. For example, a shorter change time produces a lower distribution, and the shape of the distribution reflects the inverse of the change rate of the pressure at each pressure difference level.

The invention has been described above by means of application examples shown in the figures. The invention is not, however, restricted to the examples of the figures in any way, but the invention may be varied entirely freely within the scope of the claims. The figures in the drawings must be seen as examples of the principle, which do not show detailed structures or mathematical results.

## Claims

1. A method for measuring pressure differences of different spaces in a building that is provided with a ventilation device (3), in which method the efficiency of the ventilation of the building is varied to establish pressure differences in the spaces of the building by means of the ventilation device (3) by actively controlling the electrical input power of a fan of the ventilation device (3), the amount of air passing in a duct, or pressure difference across the ventilation device (3), the pressure differences established by the varied efficiency of the ventilation are measured by means of absolute pressure sensors (2) measuring absolute pressure, wherein the measurement results obtained at different instants of time from the absolute pressure sensors (2) are combined with information on the efficiency of the ventilation of the building at different instants of time, and the pressure differences established by the varied efficiency of the ventilation are mathematically separated from the measurement results by making use of information on the prevailing efficiency of ventilation.

2. A method as claimed in claim 1, **characterised by** controlling the efficiency (6) of the ventilation device (3) by means of a control unit, and by the control unit also gathering the measurement information of the sensors (1, 2).

3. A method as claimed in claim 1 or 2, **characterised by** periodically switching off the ventilation device (3) completely.

4. A method as claimed in any one of the preceding claims, wherein the measurement information obtained from the absolute pressure sensors (2) and a reference sensor (1) measuring outdoor pressure are combined to each other by subtracting the outdoor pressure measurement information from indoor pressure measurement information, which produces an uncorrected pressure difference, **characterised by** correcting the instability evidenced by the uncorrected pressure difference (9) by a correction (10) calculated on the basis of the resetting moments obtained from the efficiency change of the ventilation device (3), and by obtaining the final pressure difference information by subtracting the correction (10), determined on the basis of the resetting moments, from the uncorrected pressure difference (9).

5. A method as claimed in any one of the preceding claims, **characterised by** using the pressure change taking place after a fast efficiency change of the ventilation device (3) for calculating leakage air flow rates by determining the delay in the evening out of the difference (11) of the air pressures in indoor spaces and outdoors, including the delay in the information on the volume of the indoor spaces of the building, and defining, on the basis of the information in question, the amount of airflow per a time unit.

6. A method as claimed in claim 5, **characterised by** gathering a large amount of pressure change information (13) taking place as a result of fast efficiency changes (6) of the ventilation device (3) and obtained at different times, and forming, out of the information, a statistical distribution (14) by means of which the amount of air flow is determined per a time unit.

## Patentansprüche

1. Verfahren zum Messen von Druckdifferenzen verschiedener Räume in einem mit einer Lüftungsvorrichtung (3) versehenen Gebäude, wobei bei dem Verfahren die Effizienz der Lüftung des Gebäudes variiert wird, um mittels der Lüftungsvorrichtung (3) Druckdifferenzen in den Räumen des Gebäudes herzustellen, wobei die Variation durch aktives Steuern der elektrischen Eingangsleistung eines Ventilators der Lüftungsvorrichtung (3), der in einem Kanal strömenden Luftmenge oder der Druckdifferenz über die Lüftungsvorrichtung (3) erfolgt, wobei die durch die variierte Effizienz der Lüftung hergestellten Druckdifferenzen mittels Absolutdrucksensoren (2) zum Messen des Absolutdrucks gemessen werden, wobei die zu verschiedenen Zeitpunkten von den Absolutdrucksensoren (2) erhaltenen Messergebnisse mit Informationen über die Effizienz der Lüftung des Gebäudes zu verschiedenen Zeitpunkten kombiniert werden und die durch die variierte Effizienz der Lüftung hergestellten Druckdifferenzen unter Verwendung von Informationen über die vorherrschende Effizienz der Lüftung mathematisch von den Messergebnissen getrennt werden.

2. Verfahren nach Anspruch 1, **dadurch gekennzeichnet, dass** die Effizienz (6) der Lüftungsvorrichtung (3) mittels einer Steuereinheit gesteuert wird und dass die Steuereinheit auch die Messinformationen der Sensoren (1, 2) sammelt.

3. Verfahren nach Anspruch 1 oder 2, **dadurch gekennzeichnet, dass** die Lüftungsvorrichtung (3) periodisch vollständig ausgeschaltet wird.

4. Verfahren nach einem der vorhergehenden Ansprüche, wobei die von den Absolutdrucksensoren (2) und einem den Außendruck messenden Referenzsensor (1) erhaltenen Messinformationen miteinander kombiniert werden, indem die Außendruck-Messinformation von der Innendruck-Messinformation subtrahiert wird, wodurch eine unkorrigierte Druckdifferenz erzeugt wird, **dadurch gekennzeichnet, dass** die durch die unkorrigierte Druckdifferenz (9) angezeigte Instabilität durch eine Korrektur (10) korrigiert wird, die auf der Grundlage der aus der Effizienzänderung der Lüftungsvorrichtung (3) erhaltenen Rücksetzzeitpunkte berechnet wird, und dass die endgültige Druckdifferenzinformation durch Subtrahieren der auf der Grundlage der Rücksetzzeitpunkte bestimmten Korrektur (10) von der unkorrigierten Druckdifferenz (9) erhalten wird.

5. Verfahren nach einem der vorhergehenden Ansprüche, **dadurch gekennzeichnet, dass** die nach einer schnellen Effizienzänderung der Lüftungsvorrichtung (3) auftretende Druckänderung zum Berechnen von Leckluftströmungsraten verwendet wird, indem die Verzögerung beim Ausgleichen der Differenz (11) der Luftdrücke in Innenräumen und im Freien bestimmt wird, einschließlich der Verzögerung in der Information über das Volumen der Innenräume des Gebäudes, und auf der Grundlage der betreffenden Information die Luftströmungsmenge pro Zeiteinheit definiert wird.

6. Verfahren nach Anspruch 5, **dadurch gekennzeichnet, dass** eine große Menge von Druckänderungsinformationen (13), die infolge schneller Effizienzänderungen (6) der Lüftungsvorrichtung (3) auftreten und zu verschiedenen Zeitpunkten erhalten werden, gesammelt wird und dass aus diesen Informationen eine statistische Verteilung (14) gebildet wird, mittels der die Luftströmungsmenge pro Zeiteinheit bestimmt wird.

## Revendications

1. Procédé de mesure de différences de pression entre différents espaces dans un bâtiment pourvu d'un dispositif de ventilation (3), dans lequel procédé l'efficacité de la ventilation du bâtiment est variée, au moyen du dispositif de ventilation (3), pour établir des différences de pression dans les espaces du bâtiment, par commande active de la puissance électrique d'entrée d'un ventilateur du dispositif de ventilation (3), de la quantité d'air passant dans un conduit ou de la différence de pression à travers le dispositif de ventilation (3), les différences de pression établies par la variation de l'efficacité de la ventilation étant mesurées au moyen de capteurs de pression absolue (2) mesurant une pression absolue, dans lequel les résultats de mesure obtenus à différents instants à partir des capteurs de pression absolue (2) sont combinés avec des informations sur l'efficacité de la ventilation du bâtiment à différents instants, et les différences de pression établies par la variation de l'efficacité de la ventilation sont mathématiquement séparées des résultats de mesure en utilisant des informations sur l'efficacité de la ventilation au moment considéré.

2. Procédé selon la revendication 1, **caractérisé en ce que** l'efficacité (6) du dispositif de ventilation (3) est commandée au moyen d'une unité de commande, l'unité de commande collectant également les informations de mesure des capteurs (1, 2).

3. Procédé selon la revendication 1 ou 2, **caractérisé en ce que** le dispositif de ventilation (3) est périodiquement mis complètement à l'arrêt.

4. Procédé selon l'une quelconque des revendications précédentes, dans lequel les informations de mesure obtenues à partir des capteurs de pression absolue (2) et d'un capteur de référence (1) mesurant la pression extérieure sont combinées entre elles par soustraction des informations de mesure de la pression extérieure des informations de mesure de la pression intérieure, ce qui produit une différence de pression non corrigée, **caractérisé en ce que** l'instabilité mise en évidence par la différence de pression non corrigée (9) est corrigée au moyen d'une correction (10) calculée sur la base des instants de remise à zéro obtenus à partir du changement d'efficacité du dispositif de ventilation (3), et **en ce que** l'information finale de différence de pression est obtenue par soustraction de la correction (10), déterminée sur la base des instants de remise à zéro, de la différence de pression non corrigée (9).

5. Procédé selon l'une quelconque des revendications précédentes, **caractérisé par** l'utilisation du changement de pression se produisant après un changement rapide d'efficacité du dispositif de ventilation (3) pour calculer des débits d'air de fuite en déterminant le retard dans l'égalisation de la différence (11) entre les pressions d'air dans les espaces intérieurs et à l'extérieur, y compris le retard dans l'information relative au volume des espaces intérieurs du bâtiment, et en définissant, sur la base desdites informations, le débit d'air par unité de temps.

6. Procédé selon la revendication 5, **caractérisé par** la collecte d'une grande quantité d'informations relatives à des variations de pression (13) se produisant à la suite de changements rapides d'efficacité (6) du dispositif de ventilation (3) et obtenues à différents moments, et par la formation, à partir de ces informations, d'une distribution statistique (14) au moyen de laquelle le débit d'air par unité de temps est déterminé.
